# EUROPÄISCHE PATENTSCHRIFT

(11) **EP 2 188 090 B1**
(45) Veröffentlichungstag und Bekanntmachung des Hinweises auf die Patenterteilung: **09.11.2011**
(21) Anmeldenummer: 08786728.9
(22) Anmeldetag: 01.08.2008
(51) Int. Cl.: B23Q 39/02, B23Q 3/10, F16B 7/04

(54) **WERKZEUGTRÄGEREINRICHTUNG UND VORRICHTUNG ZUR VERARBEITUNG FLACHER ZUSCHNITTE**
TOOL CARRIER DEVICE AND DEVICE FOR MACHINING FLAT SECTIONS
DISPOSITIF PORTE-OUTIL ET DISPOSITIF POUR USINER DES PIÈCES DÉCOUPÉES PLATES

(30) Priorität: 01.08.2007 EP 07113613
(43) Veröffentlichungstag der Anmeldung: 26.05.2010
(73) Patentinhaber: Kama GmbH, 01237 Dresden (DE)
(72) Erfinder: HERFURTH, Bernd, 01157 Dresden (DE); PIEPER, Steffen, 01324 Dresden (DE)
(74) Vertreter: Lippert, Stachow & Partner
(86) Internationale Anmeldenummer: PCT/EP2008/060107
(87) Internationale Veröffentlichungsnummer: WO 2009/016250

(56) Entgegenhaltungen:
- EP-A- 0 540 419
- WO-A-99/52637
- DE-B3-102005 020 591
- US-A1- 2003 209 116

## Beschreibung

Nachfolgend werden eine Werkzeugträgereinrichtung, insbesondere für eine Vorrichtung zur Verarbeitung flacher Zuschnitte, beispielsweise Kartonagen, sowie eine derartige Vorrichtung beschrieben. Die in einem vorhergehenden Arbeitsschritt beispielsweise durch Stanzen aus Papierbögen oder Kartonbögen hergestellten Zuschnitte müssen zur Herstellung bestimmter Artikel wie Broschüren, Präsentationsmappen und so weiter in weiteren Arbeitsschritten gefalzt, geklebt und so weiter werden. Die beschriebene Vorrichtung dient der Durchführung solcher Arbeitsschritte.

Hierzu umfasst die Vorrichtung eine Transporteinrichtung zum Transport der Zuschnitte entlang eines Formungspfads. Die Transporteinrichtung kann beispielsweise eine Mehrzahl beidseitig in je einer Lagerbank drehbar gelagerter Transportwalzen umfassen, von denen wenigstens ein Teil antreibbar ist. Weiterhin kann die Vorrichtung auswechselbare Werkzeuge zur Führung der Zuschnitte auf der Transporteinrichtung sowie zur Durchführung der einzelnen Verarbeitungsschritte, deren Positionen relativ zu den Transportwalzen der Transporteinrichtung einstellbar sein können, umfassen. Derartige Werkzeuge können beispielsweise Niederhalter, Falzschultern, Klebstoffspender, Luftdüsen, Sensoren und so weiter sein, die die Zuschnitte gegen seitliches Verrutschen fixieren, die Zuschnitte falzen, Klebstoff auftragen, Luft einblasen, bestimmte Messwerte erfassen und so weiter.

Abhängig von dem zu fertigenden Produkt werden unterschiedlichste Anordnungen verschiedener Werkzeuge entlang des Formungspfads benötigt. Dies bedeutet, dass bei jeder Umstellung der Produktion die Art und Reihenfolge der benötigten Werkzeuge neu konfiguriert werden muss. Dabei hängt die Qualität der erzeugten Produkte wesentlich von der Genauigkeit der Positionierung der einzelnen Werkzeuge relativ zu den Transportwalzen der Transporteinrichtung ab. Die beschriebene Werkzeugträgereinrichtung ermöglicht eine genaue Positionierung der Werkzeuge.

Eine Vorrichtung zur Verarbeitung flacher Zuschnitte der oben beschriebenen Art ist aus CH 689 300 A bekannt, bei der die flachen Zuschnitte zwischen einer unteren waagrechten Transportebene und oberen Druckeinrichtungen transportiert werden, um entlang der ganzen Falz-Klebe-Maschine von Falz-und/oder Klebeorganen bearbeitet werden zu können, wobei die Transportebene eine Reihe von angetriebenen Transportwalzen aufweist und die oberen Druckmittel und die oberen Werkzeuge auf einen oder mehrere obere Portalrahmen montiert sind, die durch senkrechte Stützen direkt mit dem Rahmen der Transporteinrichtung verbunden sind. Die Portalrahmen werden ebenfalls genutzt, um mit großer Präzision die verschiedenen Werkzeuge zu positionieren.

Eine ähnliche Lösung ist in EP 1 424 191 A2 beschrieben, bei der ebenfalls oberhalb einer Anordnung von Transportwalzen Portalrahmen in der Transportrichtung hintereinander angeordnet sind, so dass daran Werkzeuge angebracht werden können, welche auf die flachen Zuschnitte, die über die Transportwalzen transportiert werden einwirken, wobei die Portalrahmen entlang der Transportrichtung an verschiedenen Positionen anbringbar sind.

DE 10 2005 020 591 B3 beschreibt ebenfalls eine sehr ähnliche Vorrichtung, bei der die verschiedenen Werkzeuge an Portalrahmen befestigt sind, welche sich quer über den Formungspfad der flachen Zuschnitte erstrecken, wobei hier jedoch die Verwendung eines Bandförderers anstelle von Transportwalzen vorgeschlagen wird.

Diesen bekannten Vorrichtungen ist gemein, dass jeder Portalrahmen einzeln umgesetzt werden muss, wenn die Vorrichtung für ein anderes Produkt neu konfiguriert werden soll. Hierzu werden im Allgemeinen mindestens zwei Bedienpersonen (eine auf jeder Seite der Transportvorrichtung) benötigt, da sich die Portalrahmen von einer einzelnen Person nur schwer oder gar nicht handhaben lassen.

Es besteht daher ein Bedürfnis nach einer Vorrichtung zur Verarbeitung flacher Zuschnitte, bei der die Position der Werkzeuge entlang des Transportwegs der flachen Zuschnitte schnell und einfach veränderbar ist. Es wurde daher nach einer technischen Lösung gesucht, die die Verwendung schwergewichtiger, an der Transporteinrichtung angebrachter Portalrahmen vermeidet und die dennoch sicherstellt, dass eine einzelne Bedienperson die gewünschten Änderungen der Werkzeugkonfiguration innerhalb kürzester Zeit vornehmen kann.

Die vorgeschlagene Werkzeugträgereinrichtung zur verstellbaren Anordnung von Werkzeugen entlang eines Formungspfads umfasst zwei parallel zueinander in der Längsrichtung des Formungspfads verlaufend und oberhalb davon angeordnete Trägerschienen, weiterhin mindestens einen Querträger, der an mehreren vorbestimmten Positionen entlang des Formungspfads jeweils mit beiden Trägerschienen lösbar so verbindbar ist, dass der Querträger quer zur Längsrichtung des Formungspfads angeordnet ist, sowie weiterhin mindestens einen Werkzeughalter, der mit dem Querträger lösbar verbindbar ist.

Die vorgeschlagene Vorrichtung verlässt damit das bisher verfolgte Konzept der Verwendung von Portalrahmen, bei denen jeder Querträger auf zwei eigenen senkrechten Stützen angebracht ist, die sich quer über die Transporteinrichtung erstrecken und die direkt an der Transporteinrichtung befestigt sind. Vielmehr wird bei der vorgeschlagenen Lösung eine Befestigungseinrichtung verwendet, die oberhalb der Transportebene positionierte, in der Transportrichtung verlaufende Trägerschienen umfasst. An diesen Trägerschienen können sodann einfache, leicht zu handhabende Querträger an verschiedenen Positionen angebracht werden, so dass die Werkzeugkonfiguration jederzeit mit geringstem Aufwand an neue Anwendungen angepasst werden kann. Gegenüber Lösungen, bei denen jeder Werkzeughalter an einem separaten, die Transporteinrichtung der Vorrichtung zur Verarbeitung flacher Zuschnitte überspannenden Portalrahmen angeordnet ist, ergibt sich mit der beschriebenen Lösung der Vorteil, dass die Position eines Werkzeugs entlang des Formungspfads schnell und einfach dadurch verändert werden kann, dass die Trägerschienen der Werkzeugträgereinrichtung relativ zur Transporteinrichtung fest installiert sind und ein Querträger zur Aufnahme eines Werkzeughalters bedarfsweise schnell und einfach aus einer vorbestimmten Position entnommen und in einer anderen vorbestimmten Position angeordnet werden kann. Dieser Positionswechsel kann bei der beschriebenen Werkzeugträgereinrichtung von einer einzelnen Bedienperson und von einer Seite der Transporteinrichtung aus vorgenommen werden.

In einer ersten Ausgestaltung ist vorgesehen, dass der Werkzeughalter an einer beliebigen Position entlang des Querträgers positionierbar ist. Alternativ kann die Werkzeugträgereinrichtung auch so ausgestaltet sein, dass der Werkzeughalter an mehreren vorbestimmten Positionen entlang des Querträgers, d.h. quer zur Transportrichtung der flachen Zuschnitte, positionierbar ist.

Die Werkzeugträgereinrichtung kann auf verschiedenste Weise an einer Vorrichtung zur Verarbeitung flacher Zuschnitte angebracht werden, beispielsweise indem die Trägerschienen mit ohnehin vorhandenen Elementen des Rahmens der Vorrichtung verbunden werden. In einer Ausgestaltung ist hingegen vorgesehen, dass weiterhin an jeder Trägerschiene mindestens ein Stützelement zur Anbringung der Trägerschiene oberhalb des Formungspfads vorgesehen ist. Derartige Stützelemente können beispielsweise senkrechte Stützstäbe sein, die sich von den Trägerschienen abwärts erstrecken, so dass ihre unteren Enden mit Elementen der Transporteinrichtung der Vorrichtung, beispielsweise den Lagerbänken von Transportwalzen einer derartigen Transporteinrichtung, verbunden werden können. Die Position der Trägerschienen relativ zur Transporteinrichtung muss nicht verändert werden, so dass sie auch - gegebenenfalls mit Hilfe der oben beschriebenen Stützelemente - fest mit der Transporteinrichtung verbunden sein können.

Um die Änderung der Position eines Querträgers entlang des Formungspfads zu erleichtern kann vorgesehen sein, dass mindestens eine Trägerschiene an jeder vorbestimmten Position ein Aufnahmemittel zur formschlüssigen Aufnahme eines Endes eines Querträgers aufweist. Die Anordnung von Aufnahmemitteln an den vorbestimmten Positionen erleichtert die Positionierung der Querträger und verhindert Fehlpositionierungen. Um dies zu erreichen kann beispielsweise vorgesehen sein, dass das Aufnahmemittel zum Einschieben eines Endes des Querträgers quer zur Längsrichtung des Formungspfads ausgebildet ist. Hierdurch wird das Ende des Querträgers zumindest in der Längsrichtung des Formungspfads eindeutig positioniert.

Beispielsweise kann ein derartiges Aufnahmemittel so ausgestaltet sein, dass das Aufnahmemittel eine dem Querschnitt des Querträgers entsprechende Aussparung ist, die in einer Weiterbildung nach oben offen sein kann.

In einer einfachen Ausgestaltung sind sowohl die Trägerschiene als auch die Querträger aus einem Rechteckhohlprofil gefertigt, wobei in einer Seitenfläche der Trägerschiene an den vorbestimmten Positionen rechteckige Löcher angeordnet sind, deren Form dem Querschnitt der Querträger entspricht. Bei einer Trägerschiene aus Vollmaterial wird der gleiche Effekt durch ein Sackloch erreicht. Der Querträger kann in ein solches rechteckiges Loch seitlich, das heißt quer zur Längsrichtung des Formungspfads, eingeschoben werden, so dass das rechteckige Loch eine Verschiebung des Querträgers in der Längsrichtung des Formungspfads und in vertikaler Richtung verhindert. Die Bewegung des Querträgers in horizontaler Richtung quer zur Längsrichtung des Formungspfads wird durch die zweite Seitenfläche des Rechteckhohlprofils der Trägerschiene, in der keine Löcher vorgesehen sind, begrenzt.

Eine weitere einfache Ausgestaltung der Werkzeugträgereinrichtung sieht vor, dass in einer Auflagefläche der Trägerschiene Bohrungen und an der Unterseite des Querträgers in die Bohrungen der Trägerschiene einführbare Zapfen vorgesehen sind. Alternativ können die Zapfen an der Auflagefläche der Trägerschiene und die Bohrungen an den Unterseiten der Querträger vorgesehen sein. Alle Ausgestaltungen sind rein beispielhaft aufgezählt; weitere Ausgestaltungen des vorgeschlagenen Konzepts zur Anordnung der Querträger an vorbestimmten Positionen der Trägerschiene sind möglich, ohne vom Grundgedanken der vorgeschlagenen Werkzeugträgereinrichtung abzuweichen.

In einer weiteren Ausgestaltung der vorgeschlagenen Werkzeugträgereinrichtung ist vorgesehen, dass mindestens eine Trägerschiene einen Stab mit einer ebenen Auflagefläche umfasst, an deren seitlicher Begrenzung parallel zum Stab verlaufend ein erster Materialstreifen angeordnet ist, der die Auflagefläche nach oben überragt und der an jeder vorbestimmten Position eine nach oben offene Aussparung aufweist. Der Querträger kann in diesem Fall mit seinem Ende von oben in die Aussparung eingelegt werden, so dass das Ende des Querträgers auf der Auflagefläche aufliegt und so in der nach oben offenen Aussparung angeordnet ist, dass eine Verschiebung des Querträgers in der Längsrichtung des Formungspfads verhindert wird. Weitere Maßnahmen zur Verhinderung oder Begrenzung von Bewegungen in den beiden anderen Raumrichtungen können an der Trägerschiene oder/und am Querträger, beispielsweise in Form von Anschlägen, vorgesehen sein.

In einer beispielhaften Ausgestaltung kann vorgesehen sein, dass an der der Auflagefläche des Stabs abgewandten Seite des ersten Materialstreifens ein zweiter Materialstreifen vorgesehen ist, der die Funktion eines Anschlags übernimmt, der die Bewegung des Querträgers quer zur Längsrichtung des Stabs begrenzt. Weiter kann vorgesehen sein, dass der zweite Materialstreifen den ersten Materialstreifen nach oben überragt und der obere Bereich des zweiten Materialstreifens so abgekantet ist, dass der abgekantete obere Bereich des zweiten Materialstreifens horizontal über den ersten Materialstreifen ragt und so die Funktion eines Anschlags, oder Niederhalters, übernimmt, der die Bewegung des Querträgers in vertikaler Richtung begrenzt.

Es kann weiter vorgesehen sein, dass mindestens ein Querträger an mindestens einem Ende eine Klemmeinrichtung zur Herstellung einer kraftschlüssigen Verbindung mit einer Trägerschiene aufweist. In diesem Fall wird das entsprechende Ende des Querträgers durch die von der Klemmeinrichtung auf die Trägerschiene ausgeübte Kraft an der gewünschten Position gehalten.

In einem Ausführungsbeispiel umfasst eine erste Trägerschiene der Werkzeugträgereinrichtung einen Stab mit einer ebenen Auflagefläche, an deren seitlicher Begrenzung parallel zum Stab verlaufend ein erster Materialstreifen mit Aussparungen und einen zweiten Materialstreifen mit einem abgekanteten oberen Bereich angeordnet ist und eine zweite Trägerschiene der Werkzeugträgereinrichtung einen Stab mit einer ebenen Auflagefläche, an deren seitlicher Begrenzung parallel zum Stab verlaufend ein erster Materialstreifen mit Aussparungen angeordnet ist. Die Querträger in diesem Ausführungsbeispiel sind Rechteckhohlprofile, die jeweils an einem Ende mit einer Klemmeinrichtung versehen sind.

Die Anbringung eines Querträgers an einer vorbestimmten Position kann von einer Bedienperson von einer Seite der Transporteinrichtung aus vorgenommen werden, indem das erste Ende des Querträgers, das keine Klemmeinrichtung aufweist, in das von einer Aussparung des ersten Materialstreifens und vom abgekanteten oberen Bereich des zweiten Materialstreifens gemeinsam gebildete Aufnahmemittel eingeschoben wird und anschließend das zweite Ende des Querträgers, das eine Klemmeinrichtung aufweist, von oben in das durch eine nach oben offene Aussparung des ersten Materialstreifens der zweiten Trägerschiene gebildete Aufnahmemittel eingelegt wird, so dass das zweite Ende auf der Auflagefläche der zweiten Trägerschiene aufliegt und schließlich mit Hilfe der Klemmeinrichtung eine kraftschlüssige Verbindung zwischen dem zweiten Ende des Querträgers und der zweiten Trägerschiene hergestellt wird.

Der Werkzeughalter der beschriebenen Werkzeugträgereinrichtung kann eine Haltestrebe zur Verbindung mit dem Querträger aufweisen, die beispielsweise durch eine Klemmeinrichtung kraftschlüssig am Querträger angebracht werden kann. Dabei kann vorgesehen sein, dass die Haltestrebe eine Höhenverstelleinrichtung zur vertikalen Verstellung des Werkzeugs umfasst. In einer Ausgestaltung ist vorgesehen, dass die Höhenverstelleinrichtung einen Exzenterhebel umfasst, der auf dem oberen Ende einer ersten, mit dem Querträger verbindbaren Komponente der Haltestrebe aufliegt und der an einer zweiten, das Werkzeug tragenden Komponente der Haltestrebe drehbar so gelagert ist, dass das Werkzeug bei Betätigung des Exzenterhebels je nach dessen Betätigungsrichtung in vertikaler Richtung abgesenkt oder angehoben wird.

Eine solche erste Komponente der Haltestrebe kann beispielsweise eine Rohrhülse sein, die mittels einer Klemmeinrichtung mit dem Querträger verbunden ist. Die zweite Komponente der Haltestrebe kann ein in der Rohrhülse verschiebbar gelagerter Stab sein, an dessen unterem Ende das Werkzeug angebracht ist. In einer ersten Stellung des Exzenterhebels befindet sich der verschiebbar gelagerte Stab mit dem daran angeordneten Werkzeug in einer ersten, angehobenen Position und in einer zweiten Stellung des Exzenterhebels in einer zweiten, abgesenkten Position. Alternativ oder zusätzlich dazu kann vorgesehen sein, dass die Höhenverstelleinrichtung Mittel zur stufenlosen Feinjustage der vertikalen Position des Werkzeugs umfasst, beispielsweise Stellschrauben mit einem Feingewinde.

Zur Arbeitserleichterung bei der Herstellung einer vorgegebenen Konfiguration der Werkzeuge relativ zur Transporteinrichtung kann weiter vorgesehen sein, dass an mindestens einer Trägerschiene im Bereich mindestens einer vorbestimmten Position eine diese Position eindeutig identifizierende Bezeichnung sichtbar angebracht ist. Beispielsweise können die vorbestimmten Positionen fortlaufend nummeriert und die zugehörigen Nummern an der Innenseite oder/und Außenseite der Trägerschiene angebracht sein.

Dabei muss nicht an jeder vorbestimmten Position eine eindeutig identifizierende Bezeichnung angebracht sein; in vielen Fällen reicht es aus, wenn nur an jeder zweiten oder jeder fünften und so weiter Position eine Bezeichnung angebracht ist. Eine derartige Identifizierung der vorbestimmten Positionen kann beispielsweise auch für Steuervorgänge an den Werkzeugen genutzt werden, beispielsweise indem an der Vorrichtung eine speicherprogrammierbare Steuerung (SPS) vorgesehen ist, in deren Datenspeicher Informationen über die Koordinaten jeder vorbestimmten Position gespeichert sind, so dass Steuerungsabläufe für neue Werkzeugkonfigurationen auf einfache Weise programmierbar sind.

Eine Werkzeugträgereinrichtung der oben beschriebenen Art kann Bestandteil einer Vorrichtung zur Verarbeitung flacher Zuschnitte sein. Eine derartige Vorrichtung kann neben der Werkzeugträgereinrichtung eine Transporteinrichtung zum Transport der Zuschnitte entlang des Formungspfads umfassen, die eine Anordnung beidseitig des Formungspfads mit gleichem Abstand drehbar gelagerter Transportwalzen umfasst und bei der die Werkzeugträgereinrichtung so angeordnet ist, dass das oder die Werkzeuge relativ zu den Transportwalzen positionierbar angeordnet sind. Vorteilhaft ist aber vorgesehen, dass der Abstand vorbestimmter Positionen entlang der Trägerschienen der Werkzeugträgereinrichtung gleich dem Abstand der Transportwalzen der Transporteinrichtung ist.

Hierdurch ergibt sich ohne weitere Einstellmaßnahmen eine räumliche Beziehung des Werkzeughalters - und dadurch des daran angeordneten Werkzeugs - zu den Transportwalzen der Transporteinrichtung einer entsprechenden Vorrichtung zur Verarbeitung flacher Zuschnitte.

Die Werkzeuge werden durch ihre Befestigung an einer jeden Querstrebe immer in der Längsrichtung des Formungspfads exakt in der jeweils gewünschten Position relativ zu den Transportwalzen ausgerichtet, so dass z. B. Anpressrollen von Niederhaltern deckungsgleich mit darunter angeordneten Transportwalzen sind, um ein optimales Ergebnis zu erzielen. In gleicher Weise werden beispielsweise Klebstoffspender, Luftdüsen, Sensoren usw. genau oberhalb einer Lücke zwischen zwei benachbarten Transportwalzen positioniert, indem entsprechend ausgestaltete Werkzeughalter, ohne weitere Einstellung der Position in der Längsrichtung des Formungspfads, einfach an einem Querträger befestigt werden. Dabei ist die Befestigung der Werkzeuge sowohl vor als auch hinter einer Querstrebe möglich; eine weitere Justage in der Längsrichtung ist nicht erforderlich.

Durch die Kennzeichnung der vorbestimmten Rüstpositionen ist ein schnelles Einrichten von sich wiederholenden Arbeiten und Werkzeugkonfigurationen möglich. Die Übergabe der Positionen von gerüsteten Werkzeugen anhand einer eindeutig i-dentifizierenden Bezeichnung, beispielsweise an eine SPS, erübrigt das Messen und Eingeben von Abständen zwischen Sensoren und gesteuerten Werkzeugen.

Nachfolgend wird die beschriebene Werkzeugträgereinrichtung an Hand eines Ausführungsbeispiels und zugehöriger Zeichnungen näher beschrieben, worin
- Fig. 1: die Werkzeugträgereinrichtung in perspektivischer Ansicht,
- Fig. 2: eine Detailansicht der ersten Trägerschiene,
- Fig. 3: eine Detailansicht der zweiten Trägerschiene zeigt,
- Fig. 4: eine Seitenansicht einer Vorrichtung zur Verarbeitung flacher Zuschnitte mit der beschriebenen Werkzeugträgereinrichtung,
- Fig. 5: eine perspektivische Ansicht der Vorrichtung aus Fig. 4, und
- Fig. 6: vergrößerte Teilansichten dieser Vorrichtung.

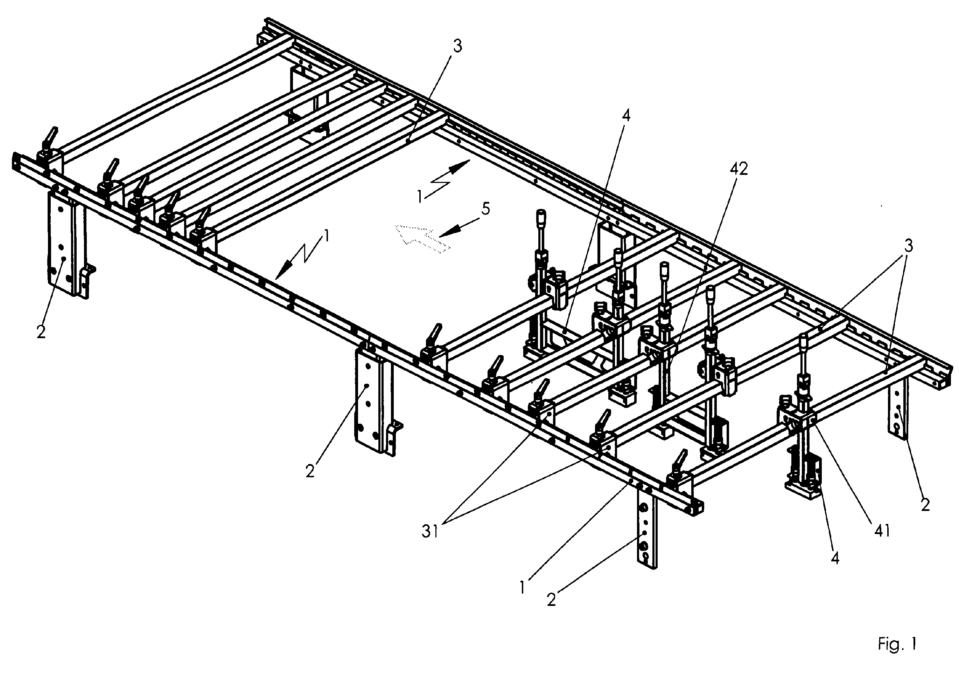

Die Werkzeugträgereinrichtung in Fig. 1 zur verstellbaren Anordnung von Werkzeugen entlang eines Formungspfads 5 umfasst zwei parallel zueinander in der Längsrichtung des Formungspfads 5 verlaufend und oberhalb davon angeordnete Trägerschienen 1. Eine Mehrzahl von Querträgern 3 ist an je einer von mehreren vorbestimmten Positionen entlang des Formungspfads 5 jeweils mit beiden Trägerschienen 1 lösbar so verbunden, dass die Querträger 3 quer zur Längsrichtung des Formungspfads 5 angeordnet sind. Die Querträger 3 weisen jeweils an einem Ende eine Klemmeinrichtung 31 zur Herstellung einer kraftschlüssigen Verbindung mit einer Trägerschiene 1 auf.

An einigen der Querträger 3 sind Werkzeughalter 4 mit dem jeweiligen Querträger 3 lösbar verbunden. Die Werkzeughalter 4 sind jeweils an beliebigen Positionen entlang des Querträgers 3 positionierbar. Die Werkzeughalter 4 umfassen eine Haltestrebe 42 zur Verbindung mit dem Querträger 3, die durch eine Klemmeinrichtung 41 kraftschlüssig am Querträger 3 angebracht ist.

An jeder der beiden Trägerschienen 1 sind Stützelemente 2 zur Anbringung der Trägerschiene 1 oberhalb des Formungspfads 5 vorgesehen. Im Ausführungsbeispiel umfassen die Stützelemente 2 senkrechte Stützstäbe 21, die sich von den Trägerschienen 1 abwärts erstrecken, so dass ihre unteren Enden mit Elementen der Transporteinrichtung der Vorrichtung, beispielsweise den Lagerbänken von Transportwalzen einer derartigen Transporteinrichtung, verbindbar sind. Weiter umfassen die Stützelemente 2 senkrechte Stützschienen 22, die zur Befestigung an den Lagerbänken der Transporteinrichtung ausgebildet sind und in denen die senkrechten Stützstäbe 21 verschiebbar und an je einer von mehreren senkrechten Positionen anbringbar sind. Hierzu weisen die Stützstäbe 21 und die Stützschienen 22 mehrere Bohrungen auf, so dass durch die Auswahl einer Bohrungspaarung zwischen einer Stützschiene 22 und einem Stützstab 21 die Höhe der Querträger über dem Formungspfad 5 einstellbar ist.

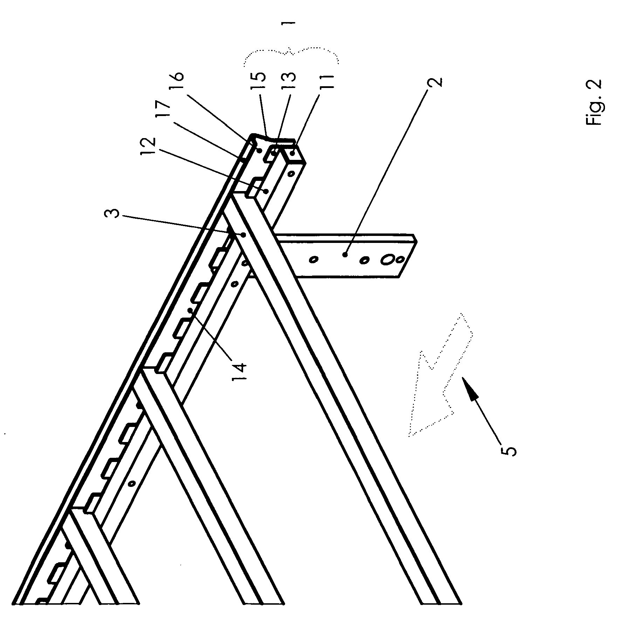

In Fig. 2 ist eine Detailansicht einer ersten Trägerschiene 1 dargestellt. An der Trägerschiene 1 ist ein Stützelement 2 zur Anbringung der Trägerschiene 1 oberhalb des Formungspfads 5 angeordnet. Die Trägerschiene 1 umfasst einen Stab 11 mit Rechteckquerschnitt mit einer ebenen Auflagefläche 12. An der äußeren seitlichen Begrenzung der Auflagefläche 12 des Stabs 11 ist ein parallel zum Stab 11 verlaufender, erster Materialstreifen 13 mit nach oben offenen Aussparungen 14 angeordnet, wobei die Aussparungen 14 als seitliche Anschläge gegen ungewollte Bewegungen der Querträger 3 in der Längsrichtung des Umformpfads 5 für die Querträger 3 dienen. An der der Auflagefläche 12 abgewandten Seite des ersten Materialstreifens 13 ist ein zweiter Materialstreifen 15 mit einem abgekanteten oberen Bereich 17 angeordnet, wobei der untere Bereich 16 als Anschlag für die Querträger 3 gegen ungewollte Bewegungen der Querträger 3 quer zur Längsrichtung des Umformpfads 5 und der abgekantete obere Bereich 17 als Niederhalter für die Querträger 3 dient.

Die Querträger 3, die im Ausführungsbeispiel als Stäbe mit Rechteckquerschnitt ausgeführt sind, können durch eine Bedienperson auf einfache weise in das von einer Aussparung 14 des ersten Materialstreifens 13 und vom abgekanteten oberen Bereich 17 des zweiten Materialstreifens 15 gemeinsam gebildete Aufnahmemittel eingeschoben werden, so dass das Ende des jeweiligen Querträgers 3 auf der Auflagefläche 12 der Trägerschiene 1 aufliegt und gleichzeitig formschlüssig mit der Trägerschiene 1 verbunden ist.

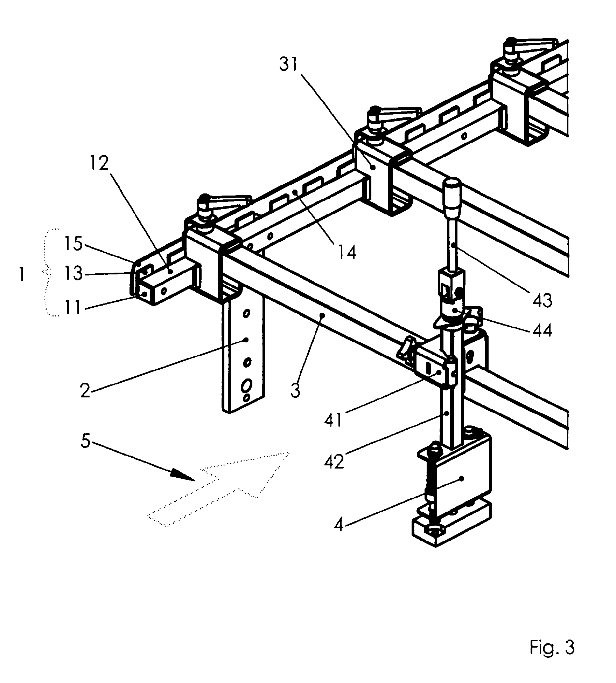

In Fig. 3 ist eine Detailansicht einer zweiten Trägerschiene 1 dargestellt. An der Trägerschiene 1 ist ein Stützelement 2 zur Anbringung der Trägerschiene 1 oberhalb des Formungspfads 5 angeordnet. Die Trägerschiene 1 umfasst einen Stab 11 mit Rechteckquerschnitt mit einer ebenen Auflagefläche 12. An der äußeren seitlichen Begrenzung des Stabs 11 ist ein parallel zum Stab 11 verlaufender, erster Materialstreifen 13 mit nach oben offenen Aussparungen 14 angeordnet, wobei die Aussparungen 14 als seitliche Anschläge gegen ungewollte Bewegungen der Querträger 3 in der Längsrichtung des Umformpfads 5 für die Querträger 3 dienen. An der der Auflagefläche 12 entgegengesetzten Seite des ersten Materialstreifens 13 ist ein zweiter Materialstreifen 15 angeordnet, der als Anschlag für die Querträger 3 gegen ungewollte Bewegungen der Querträger 3 quer zur Längsrichtung des Umformpfads 5 dient.

Nachdem das erste Ende eines Querträgers 3, wie oben bei Fig. 2 beschrieben, von oben in das durch eine nach oben offene Aussparung 14 des ersten Materialstreifens 13 und den zweiten Materialstreifen 15 der ersten Trägerschiene 1 gebildete Aufnahmemittel eingeschoben wurde, kann das zweite Ende des Querträgers 3, das mit einer Klemmeinrichtung 31 versehen ist, von oben in das durch eine nach oben offene Aussparung 14 des ersten Materialstreifens 13 und den zweiten Materialstreifen 15 der zweiten Trägerschiene 1 gebildete Aufnahmemittel eingelegt werden, so dass das zweite Ende des Querträgers 3 auf der Auflagefläche 12 der zweiten Trägerschiene 1 aufliegt und schließlich mit Hilfe der Klemmeinrichtung 31 eine kraftschlüssige Verbindung zwischen dem zweiten Ende des Querträgers 3 und der zweiten Trägerschiene 1 hergestellt werden.

An einem der in der Figur dargestellten Querträger 3 ist ein Werkzeughalter 4 lösbar angebracht. Der Werkzeughalter 4 ist dadurch an beliebigen Positionen entlang des Querträgers 3 positionierbar. Der Werkzeughalter 4 umfasst eine Haltestrebe 42 zur Verbindung mit dem Querträger 3, die durch eine Klemmeinrichtung 41 kraftschlüssig am Querträger 3 angebracht ist.

Eine Höhenverstelleinrichtung zur vertikalen Verstellung des Werkzeugs umfasst einen Exzenterhebel 43, der auf dem oberen Ende einer Rohrhülse der Haltestrebe 42, die mittels der Klemmeinrichtung 41 mit dem Querträger 3 verbunden ist, aufliegt. Der Exzenterhebel 43 ist an einem in der Rohrhülse verschiebbar gelagerten, an seinen unteren Ende das Werkzeug tragenden Stab drehbar so gelagert, dass der Stab und damit das Werkzeug bei Betätigung des Exzenterhebels 43 je nach dessen Betätigungsrichtung in vertikaler Richtung abgesenkt oder angehoben wird. In einer ersten Stellung des Exzenterhebels 43 befindet sich der verschiebbar gelagerte Stab mit dem daran angeordneten Werkzeug in einer ersten, angehobenen Position und in einer zweiten Stellung des Exzenterhebels 43 in einer zweiten, abgesenkten Position. Weiterhin umfasst die Höhenverstelleinrichtung des Werkzeughalters 4 mindestens eine Stellschraube 44 mit einem Feingewinde als Mittel zur stufenlosen Feinjustage der vertikalen Position des Werkzeugs.

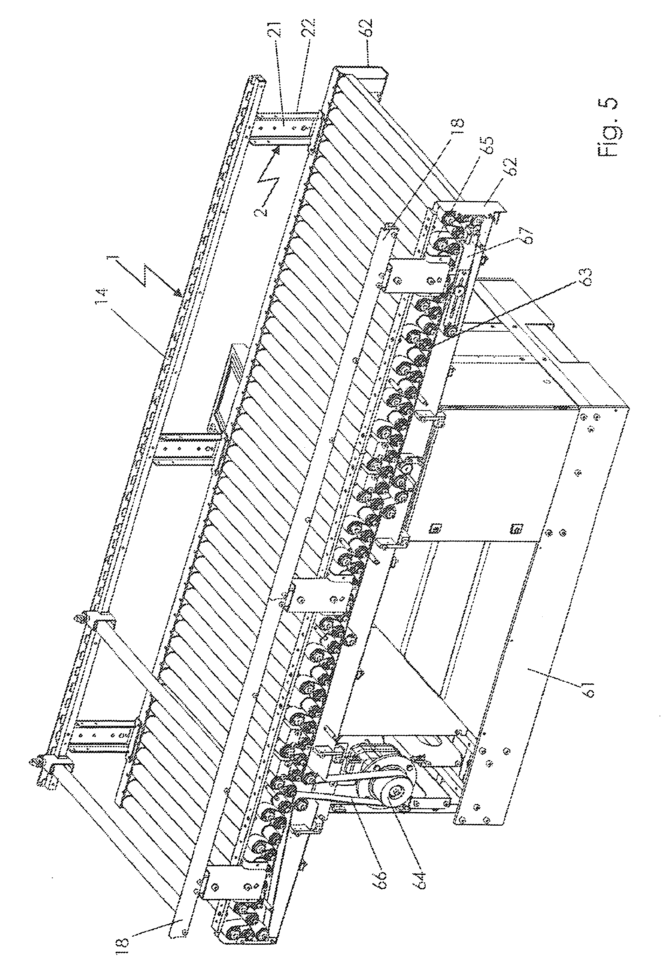

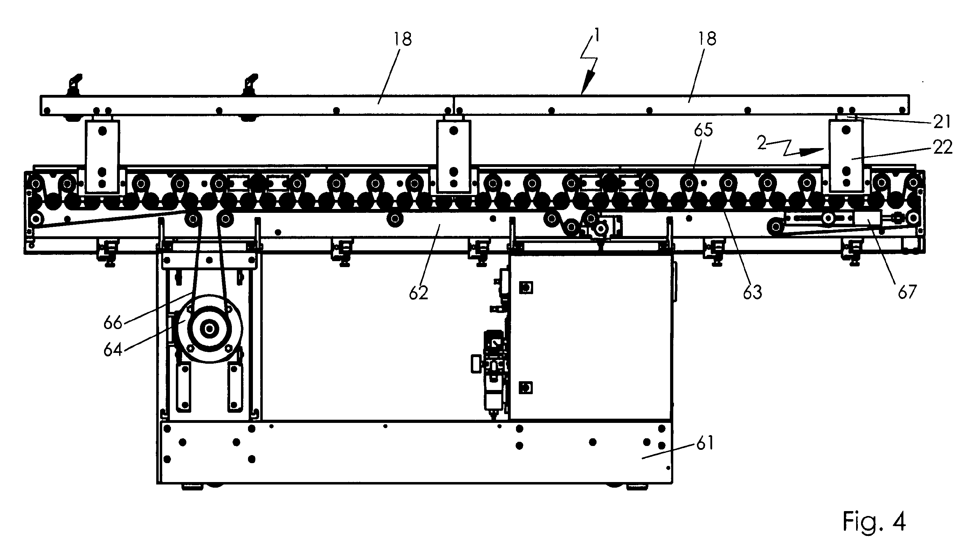

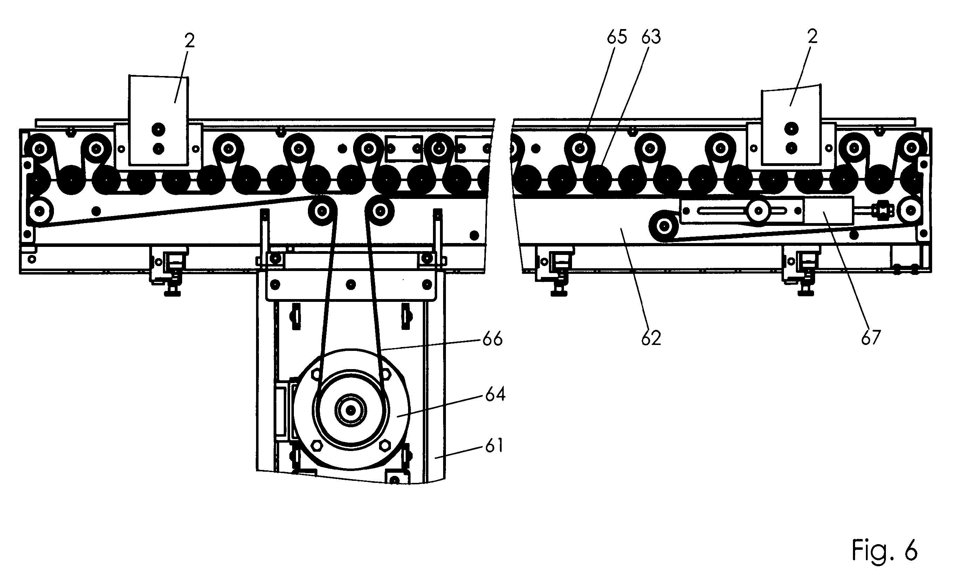

Fig. 4 zeigt eine Seitenansicht einer Vorrichtung zur Verarbeitung flacher Zuschnitte mit der beschriebenen Werkzeugträgereinrichtung und Fig. 5 eine perspektivische Ansicht dieser Vorrichtung, während in Fig. 6 zwei vergrößerte Teilansichten der Vorrichtung dargestellt sind.

Die Vorrichtung umfasst ein Grundgestell 61, auf dem zwei parallele Lagerbänke 62 angeordnet sind. Zwischen den Lagerbänken 62 sind in einer Ebene Transportwalzen 63 quer zur Transportrichtung der flachen Zuschnitte angeordnet und in den Lagerbänken 62 drehbar gelagert, so dass sie eine Transportebene und einen Formungspfad für die Zuschnitte definieren.

Am Grundgestell 61 ist weiterhin ein Elektromotor 64 angeordnet, der zum Antrieb der Transportwalzen 63 dient. Dazu ist an einer Lagerbank 62 oberhalb der Transportebene nach je zwei benachbarten Transportwalzen 63 eine Umlenkrolle 65 angeordnet und drehbar gelagert. Ein endloser Antriebsriemen 66 ist um die Riemenscheibe des Elektromotors 64 und mäanderförmig um die Transportwalzen 63 und die Umlenkrollen 65 geführt, so dass die Umschlingungsreibung zwischen dem Antriebsriemen 66 und den Transportwalzen 63 dazu führt, dass die Transportwalzen 63 gleichmäßig und im gleichen Drehsinn rotieren, wenn der Elektromotor 64 eingeschaltet wird. Eine verstellbare Spanneinrichtung 67 sorgt dafür, dass der Antriebsriemen 66 stets ausreichend gespannt ist, um Schlupf zu verhindern. Werden nun flache Zuschnitte auf die Transporteinrichtung gelegt, so werden diese gleichmäßig entlang des Formungspfads befördert.

Für eine verständlichere Darstellung ist die dem Betrachter zugewandte Lagerbank durchsichtig dargestellt. Auf die Darstellung einer zum Grundgestell 61 gehörenden Abdeckung, hinter der der Elektromotor 64 und die unterhalb der Lagerbänke 62 befindlichen Abschnitte des Antriebsriemens 66 normalerweise aus Sicherheitsgründen verborgen sind, wurde aus dem gleichen Grunde verzichtet.

An jeder der beiden Lagerbänke 62 ist mit Hilfe von Stützelementen 2 je eine Trägerschiene 1 mit Schrauben lösbar angebracht. Jede Trägerschiene 1 erstreckt sich oberhalb des Formungspfads und seitlich entlang der Transportrichtung. Im Ausführungsbeispiel wurden hierfür je drei Stützelemente 2 verwendet, die je eine Trägerschiene 1 tragen, wobei jede Trägerschiene 1 aus je zwei Teilschienen 18 zusammengesetzt ist. Jedes Stützelement 2 umfasst einen mit der Trägerschiene 1 verbundenen Stützstab 21 und eine mit der Lagerbank verbundene Stützschiene 22, wobei die Höhe der Querträger über dem Formungspfad dadurch verstellt werden kann, dass jeder Stützstab 21 auf mindestens zwei verschiedene Arten mit der zugehörigen Stützschiene 22 verbunden werden kann, so dass das Stützelement 2 verschiedene Längen annimmt.

Die Trägerschienen 1 weisen Aussparungen 14 auf, in die Querträger 3 eingelegt und anschließend an der Trägerschiene 1 befestigt werden können. Durch die so vorgegebenen Positionen der Querträger 3 relativ zur Transporteinrichtung, und damit relativ zu den Transportwalzen 63, können an den Querträgern 3 befestigte Werkzeuge schnell und einfach sowie ohne zusätzliche Justage so angeordnet werden, dass sie exakt oberhalb einer Transportwalze 63 oder einer Gruppe von Transportwalzen 63 positioniert sind und mit dieser in idealer Weise zusammenwirken. Darüber hinaus kann ein Werkzeug problemlos an einer anderen Position entlang des Formungspfads mit derselben Genauigkeit angeordnet werden, indem der Querträger 3 mitsamt dem Werkzeughalter und dem daran befestigten Werkzeug aus der Aussparung 14 entnommen und in eine andere Aussparung 14 eingelegt und dort befestigt wird.

### Bezugszeichenliste

- 1: Trägerschiene
- 11: Stab
- 12: Auflagefläche
- 13: erster Materialstreifen
- 14: Aussparung
- 15: zweiter Materialstreifen
- 16: unterer Bereich
- 17: oberer Bereich
- 18: Teilschiene
- 2: Stützelement
- 21: Stützstab
- 22: Stützschiene
- 3: Querträger
- 31: Klemmeinrichtung
- 4: Werkzeughalter
- 41: Klemmeinrichtung
- 42: Haltestrebe
- 43: Exzenterhebel
- 44: Stellschraube
- 5: Formungspfad
- 61: Grundgestell
- 62: Lagerbank
- 63: Transportwalze
- 64: Elektromotor
- 65: Umlenkrolle
- 66: Antriebsriemen
- 67: Spanneinrichtung

## Patentansprüche

1. Werkzeugträgereinrichtung zur verstellbaren Anordnung von Werkzeugen entlang eines Formungspfads (5), umfassend zwei parallel zueinander in der Längsrichtung des Formungspfads (5) verlaufend und oberhalb davon angeordnete Trägerschienen (1), weiter umfassend mindestens einen Querträger (3), der an mehreren vorbestimmten Positionen entlang des Formungspfads (5) jeweils mit beiden Trägerschienen (1) lösbar so verbindbar ist, dass er quer zur Längsrichtung des Formungspfads (5) angeordnet ist, sowie weiter umfassend mindestens einen Werkzeughalter (4), der mit dem Querträger (3) lösbar verbindbar ist.

2. Werkzeugträgereinrichtung nach Anspruch 1, **dadurch gekennzeichnet, dass** der Werkzeughalter (4) an einer beliebigen Position entlang des Querträgers (3) positionierbar ist.

3. Werkzeugträgereinrichtung nach Anspruch 1, **dadurch gekennzeichnet, dass** der Werkzeughalter (4) an mehreren vorbestimmten Positionen entlang des Querträgers (3) positionierbar ist.

4. Werkzeugträgereinrichtung einem der vorhergehenden Ansprüche, **dadurch gekennzeichnet, dass** weiterhin an jeder Trägerschiene (1) mindestens ein Stützelement (2) zur Anbringung der Trägerschiene (1) oberhalb des Formungspfads (5) vorgesehen ist.

5. Werkzeugträgereinrichtung nach einem der vorhergehenden Ansprüche, **dadurch gekennzeichnet, dass** mindestens eine Trägerschiene (1) an jeder vorbestimmten Position ein Aufnahmemittel zur formschlüssigen Aufnahme eines Endes eines Querträgers (3) aufweist.

6. Werkzeugträgereinrichtung nach Anspruch 5, **dadurch gekennzeichnet, dass** das Aufnahmemittel zum Einschieben eines Endes des Querträgers (3) quer zur Längsrichtung des Formungspfads (5) ausgebildet ist.

7. Werkzeugträgereinrichtung nach Anspruch 5 oder 6, **dadurch gekennzeichnet, dass** das Aufnahmemittel eine dem Querschnitt des Querträgers (3) entsprechende Aussparung (14) ist.

8. Werkzeugträgereinrichtung nach einem der Ansprüche 5 bis 7, **dadurch gekennzeichnet, dass** mindestens eine Trägerschiene (1) einen Stab (11) mit einer ebenen Auflagefläche (12) umfasst, an deren seitlicher Begrenzung parallel zum Stab (11) verlaufend ein erster Materialstreifen (13) angeordnet ist, der die Auflagefläche (12) nach oben überragt und der an jeder vorbestimmten Position eine nach oben offene Aussparung (14) aufweist.

9. Werkzeugträgereinrichtung nach Anspruch 8, **dadurch gekennzeichnet, dass** an der der Auflagefläche (12) des Stabs (11) abgewandten Seite des ersten Materialstreifens (13) ein zweiter Materialstreifen (15) vorgesehen ist, der die Bewegung des Querträgers (3) quer zur Längsrichtung des Stabs (11) begrenzt.

10. Werkzeugträgereinrichtung nach Anspruch 9, **dadurch gekennzeichnet, dass** der zweite Materialstreifen (15) den ersten Materialstreifen (13) nach oben überragt und der obere Bereich (17) des zweiten Materialstreifens (15) so abgekantet ist, dass der obere Bereich (17) des zweiten Materialstreifens (15) horizontal über den ersten Materialstreifen (13) ragt und so die Bewegung des Querträgers (3) in vertikaler Richtung begrenzt.

11. Werkzeugträgereinrichtung nach einem der vorhergehenden Ansprüche, **dadurch gekennzeichnet, dass** mindestens ein Querträger (3) an mindestens einem Ende eine Klemmeinrichtung (31) zur Herstellung einer kraftschlüssigen Verbindung mit einer Trägerschiene (1) aufweist.

12. Werkzeugträgereinrichtung nach einem der vorhergehenden Ansprüche, **dadurch gekennzeichnet, dass** der Werkzeughalter (4) mindestens eine Haltestrebe (42) zur Verbindung mit dem Querträger (3) aufweist.

13. Werkzeugträgereinrichtung nach Anspruch 12, **dadurch gekennzeichnet, dass** die Haltestrebe (42) eine Höhenverstelleinrichtung zur vertikalen Verstellung des Werkzeugs umfasst.

14. Werkzeugträgereinrichtung nach Anspruch 13, **dadurch gekennzeichnet, dass** die Höhenverstelleinrichtung einen Exzenterhebel (43) umfasst, der mit einer ersten, mit dem Querträger (3) verbindbaren Komponente und mit einer zweiten, das Werkzeug tragenden Komponente der Haltestrebe (42) so in Wirkverbindung steht, dass das Werkzeug bei Betätigung des Exzenterhebels (43) je nach dessen Betätigungsrichtung in vertikaler Richtung abgesenkt oder angehoben wird.

15. Werkzeugträgereinrichtung nach Anspruch 12 oder 13, **dadurch gekennzeichnet, dass** die Höhenverstelleinrichtung Mittel zur stufenlosen Feinjustage der vertikalen Positionen des Werkzeugs umfasst.

16. Werkzeugträgereinrichtung nach einem der vorhergehenden Ansprüche, **dadurch gekennzeichnet, dass** an mindestens einer Trägerschiene (1) im Bereich mindestens einer vorbestimmten Position eine diese Position eindeutig identifizierende Bezeichnung sichtbar angebracht ist.

17. Vorrichtung zur Verarbeitung flacher Zuschnitte, umfassend eine Werkzeugträgereinrichtung nach einem der Ansprüche 1 bis 16.

18. Vorrichtung nach Anspruch 17, weiter umfassend eine Transporteinrichtung zum Transport der Zuschnitte entlang des Formungspfads, die eine Anordnung beidseitig des Formungspfads mit gleichem Abstand drehbar gelagerter Transportwalzen (63) umfasst und bei der die Werkzeugträgereinrichtung so angeordnet ist, dass das oder die Werkzeuge relativ zu den Transportwalzen (63) positionierbar angeordnet sind.

19. Vorrichtung nach Anspruch 17 oder 18, **dadurch gekennzeichnet, dass** der Abstand vorbestimmter Positionen entlang der Trägerschienen (1) der Werkzeugträgereinrichtung gleich dem Abstand der Transportwalzen (63) der Transporteinrichtung ist.

## Claims

1. Tool carrier device for the adjustable arrangement of tools along a forming path (5), comprising two carrier rails (1) arranged so as to run parallel to one another in the longitudinal direction of the forming path (5) and above the latter, furthermore comprising at least one cross member (3) which can be detachably connected in each case to both carrier rails (1) at a plurality of predetermined positions along the forming path (5) in such a way that it is arranged transversely to the longitudinal direction of the forming path (5), and furthermore comprising at least one tool holder (4) which can be detachably connected to the cross member (3) .

2. Tool carrier device according to Claim 1, **characterized in that** the tool holder (4) can be located at any desired position along the cross member (3) .

3. Tool carrier device according to Claim 1, **characterized in that** the tool holder (4) can be located at a plurality of predetermined positions along the cross member (3).

4. Tool carrier device according to one of the preceding claims, **characterized in that**, furthermore, at least one supporting element (2) for attaching the carrier rail (1) above the forming path (5) is provided on each carrier rail (1).

5. Tool carrier device according to one of the preceding claims, **characterized in that** at least one carrier rail (1) has, at each predetermined position, a locating means for locating an end of a cross member (3) in a positive-locking manner.

6. Tool carrier device according to Claim 5, **characterized in that** the locating means is designed for pushing in an end of the cross member (3) transversely to the longitudinal direction of the forming path (5).

7. Tool carrier device according to Claim 5 or 6, **characterized in that** the locating means is a recess (14) corresponding to the cross section of the cross member (3).

8. Tool carrier device according to one of Claims 5 to 7, **characterized in that** at least one carrier rail (1) comprises a bar (11) having a flat bearing surface (12), at the lateral boundary of which a first material strip (13) is arranged such as to run parallel to the bar (11), said material strip (13) projecting above the bearing surface (12) and having an upwardly open recess (14) at each predetermined position.

9. Tool carrier device according to Claim 8, **characterized in that** a second material strip (15) which limits the movement of the cross member (3) transversely to the longitudinal direction of the bar (11) is provided on that side of the first material strip (13) which faces away from the bearing surface (12).

10. Tool carrier device according to Claim 9, **characterized in that** the second material strip (15) projects above the first material strip (13), and the top region (17) of the second material strip (15) is folded in such a way that the top region (17) of the second material strip (15) projects horizontally over the first material strip (13) and thus limits the movement of the cross member (3) in the vertical direction.

11. Tool carrier device according to one of the preceding claims, **characterized in that** at least one cross member (3) has, at least at one end, a clamping device (31) for producing a frictional connection to a carrier rail (1).

12. Tool carrier device according to one of the preceding claims, **characterized in that** the tool holder (4) has at least one retaining strut (42) for connecting to the cross member (3).

13. Tool carrier device according to Claim 12, **characterized in that** the retaining strut (42) comprises a height adjusting device for the vertical adjustment of the tool.

14. Tool carrier device according to Claim 13, **characterized in that** the height adjusting device comprises an eccentric lever (43) which is in operative connection with a first component, which can be connected to the cross member (3), and with a second component, carrying the tool, of the retaining strut (42) in such a way that the tool, when the eccentric lever (43) is actuated, is lowered or raised in the vertical direction, depending on the actuating direction of said eccentric lever (43).

15. Tool carrier device according to Claim 12 or 13, **characterized in that** the height adjusting device comprises means for the infinitely variable fine adjustment of the vertical position of the tool.

16. Tool carrier device according to one of the preceding claims, **characterized in that** a designation is visibly provided on at least one carrier rail (1) in the region of at least one predetermined position, said designation clearly identifying said position.

17. Apparatus for processing flat blanks, comprising a tool carrier device according to one of Claims 1 to 16.

18. Apparatus according to Claim 17, furthermore comprising a transport device for transporting the blanks along the forming path, which transport device comprises an arrangement of transport rollers (63) rotatably mounted on both sides of the forming path at the same distance apart and on which the tool carrier device is arranged in such a way that the tool or tools is/are arranged such that they can be positioned relative to the transport rollers (63).

19. Apparatus according to Claim 17 or 18, **characterized in that** the distance between predetermined positions along the carrier rails (1) of the tool carrier device is equal to the distance between the transport rollers (63) of the transport device.

## Revendications

1. Dispositif porte-outil pour l'agencement réglable d'outils le long d'une voie de formage (5), comprenant deux rails de support (1) s'étendant parallèlement l'un à l'autre dans la direction longitudinale de la voie de formage (5) et disposés au-dessus de celle-ci, comprenant en outre au moins une traverse (3) qui peut être connectée de manière amovible aux deux rails de support (1) en plusieurs positions prédéfinies le long de la voie de formage (5), de telle sorte qu'elle soit disposée transversalement à la direction longitudinale de la voie de formage (5), et comprenant en outre au moins un porte-outil (4) qui peut être connecté de manière amovible à la traverse (3).

2. Dispositif porte-outil selon la revendication 1, **caractérisé en ce que** le porte-outil (4) peut être positionné dans une position quelconque le long de la traverse (3).

3. Dispositif porte-outil selon la revendication 1, **caractérisé en ce que** le porte-outil (4) peut être positionné dans plusieurs positions prédéterminées le long de la traverse (3).

4. Dispositif porte-outil selon l'une quelconque des revendications précédentes, **caractérisé en ce qu'**au moins un élément de support (2) est en outre prévu sur chaque rail de support (1) pour le montage du rail de support (1) au-dessus de la voie de formage (5).

5. Dispositif porte-outil selon l'une quelconque des revendications précédentes, **caractérisé en ce qu**'au moins un rail de support (1) présente, dans chaque position prédéterminée, un moyen de réception pour recevoir par engagement positif une extrémité d'une traverse (3).

6. Dispositif porte-outil selon la revendication 5, **caractérisé en ce que** le moyen de réception est réalisé pour l'insertion d'une extrémité de la traverse (3) transversalement à la direction longitudinale de la voie de formage (5).

7. Dispositif porte-outil selon la revendication 5 ou 6, **caractérisé en ce que** le moyen de réception est un évidement (14) correspondant à la section transversale de la traverse (3).

8. Dispositif porte-outil selon l'une quelconque des revendications 5 à 7, **caractérisé en ce qu'**au moins un rail de support (1) comprend une barre (11) avec une surface d'appui plane (12), sur la limite latérale de laquelle est disposée une première bande de matériau (13) s'étendant parallèlement à la barre (11), qui dépasse vers le haut de la surface d'appui (12) et qui présente dans chaque position prédéterminée un évidement (14) ouvert vers le haut.

9. Dispositif porte-outil selon la revendication 8, **caractérisé en ce que** du côté de la première bande de matériau (13) opposé à la surface d'appui (12) de la barre (11) est prévue une deuxième bande de matériau (15) qui limite le mouvement de la traverse (3) transversalement à la direction longitudinale de la barre (11).

10. Dispositif porte-outil selon la revendication 9, **caractérisé en ce que** la deuxième bande de matériau (15) dépasse vers le haut de la première bande de matériau (13) et la région supérieure (17) de la deuxième bande de matériau (15) est biseautée de telle sorte que la région supérieure (17) de la deuxième bande de matériau (15) dépasse horizontalement au-delà de la première bande de matériau (13) et limite ainsi le mouvement de la traverse (3) dans la direction verticale.

11. Dispositif porte-outil selon l'une quelconque des revendications précédentes, **caractérisé en ce qu'**au moins une traverse (3) présente à au moins une extrémité un dispositif de serrage (31) pour établir une connexion par engagement par force avec un rail de support (1).

12. Dispositif porte-outil selon l'une quelconque des revendications précédentes, **caractérisé en ce que** le porte-outil (4) présente au moins un montant de fixation (42) pour la connexion à la traverse (3).

13. Dispositif porte-outil selon la revendication 12, **caractérisé en ce que** le montant de fixation (42) comprend un dispositif de réglage en hauteur pour le réglage vertical de l'outil.

14. Dispositif porte-outil selon la revendication 13, **caractérisé en ce que** le dispositif de réglage en hauteur comprend un levier excentrique (43) qui est en liaison fonctionnelle avec un premier composant pouvant être connecté à la traverse (3) et avec un deuxième composant du montant de fixation (42) portant l'outil, de telle sorte que l'outil soit abaissé ou soulevé lors de l'actionnement du levier excentrique (43) en fonction de sa direction d'actionnement dans la direction verticale.

15. Dispositif porte-outil selon la revendication 12 ou 13, **caractérisé en ce que** le dispositif de réglage en hauteur comprend des moyens pour l'ajustage fin continu des positions verticales de l'outil.

16. Dispositif porte-outil selon l'une quelconque des revendications précédentes, **caractérisé en ce que** sur au moins un rail de support (1) dans la région d'au moins une position prédéterminée, est pratiquée, de manière visible, une marque identifiant clairement cette position.

17. Dispositif pour usiner des pièces découpées plates, comprenant un dispositif porte-outil selon l'une quelconque des revendications 1 à 16.

18. Dispositif selon la revendication 17, comprenant en outre un dispositif de transport pour le transport des pièces découpées le long de la voie de formage, qui comprend un agencement de rouleaux de transport (63) montés à rotation à égale distance de chaque côté de la voie de formage, et dans lequel le dispositif porte-outil est disposé de telle sorte que le ou les outils soient disposés de manière à pouvoir être positionnés par rapport aux rouleaux de transport (63).

19. Dispositif selon la revendication 17 ou 18, **caractérisé en ce que** la distance de positions prédéterminées le long des rails de support (1) du dispositif porte-outil est égale à la distance des rouleaux de transport (63) du dispositif de transport.
